# EUROPÄISCHE PATENTANMELDUNG

(11) **EP 0 980 769 A2**
(43) Veröffentlichungstag der Anmeldung: **23.02.2000**
(21) Anmeldenummer: 99113912.2
(22) Anmeldetag: 16.07.1999
(51) Int. Cl.: B60B 33/04

(54) **Rolle, insbesondere für Apparate, Transportgeräte oder Möbel**

(30) Priorität: 05.08.1998 DE 19835221
(71) Anmelder: Batic, Marko, 73776 Altbach (DE)
(72) Erfinder: Batic, Marko, 73776 Altbach (DE)
(74) Vertreter: Pfiz, Thomas

(57) **Zusammenfassung**

Die Erfindung betrifft eine Rolle, insbesondere für Apparate, Transportgeräte oder Möbel, mit einem an einer externen Baueinheit befestigbaren Gehäuse (10) und einem über eine Radachse (12) an dem Gehäuse (10) gelagerten Rad (14). Zur Erhöhung des Fahr- und Bedienkomforts und zur Verbesserung der Traglastverteilung ist das Gehäuse (10) zweigeteilt durch ein Gehäuseoberteil (16) und ein daran als Schwinge angelenktes, das Rad (14) führendes Gehäuseunterteil (18) gebildet, wobei das Gehäuseunterteil (18) über ein federelastisches Rückstellelement (30) abgefedert ist.

## Beschreibung

Die Erfindung betrifft eine Rolle, insbesondere für Apparate, Transportgeräte oder Möbel, mit einem an einer externen Baueinheit befestigbaren Gehäuse und einem über eine Radachse an dem Gehäuse gelagerten Rad.

Rollen dieser Art dienen als passive Anbauteile dazu, Geräte, Transportsysteme und dergleichen fahrbar zu machen. Dabei ist es bekannt, Lenkrollen um eine lotrechte Schwenkachse beweglich anzubauen und mechanische Feststellvorrichtungen zum Blockieren des Rades vorzusehen. Beim Fahrbetrieb mit solchen Rollen treten jedoch häufig Probleme auf, wenn Hindernisse wie Türschwellen überwunden oder unebene Böden befahren werden müssen. Hinzu kommen Schwierigkeiten beim Manövrieren vor allem bei sperrigen oder schweren Transportgeräten und durch das Einklemmen von Fremdkörpern an den Rollen oder deren Feststellmechanik.

Ausgehend hiervon liegt der Erfindung die Aufgabe zugrunde, Rollen der eingangs genannten Art dahingehend zu verbessern, daß die angesprochenen Probleme behoben werden und eine gute Manövrierbarkeit auch bei schlechter Bodenbeschaffenheit gewährleistet wird.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Erfindungsgemäß ist es vorgesehen, daß das Gehäuse ein Gehäuseoberteil und ein daran über ein federelastisches Rückstellelement abgefedertes, das Rad führendes Gehäuseunterteil aufweist. Damit wird vor allem die Robustheit gegen Stoßbelastung im Fahrbetrieb erhöht, ein erschütterungsfreier Lauf sichergestellt und die statische und dynamische Tragfähigkeit verbessert.

Vorteilhafterweise ist das Gehäuseunterteil als Schwinge mit einer im Abstand von der Radachse parallel zu dieser ausgerichteten Schwingachse an dem Gehäuseoberteil angelenkt. Durch diese Maßnahme lassen sich Stöße noch besser abfangen und in eine Hubbewegung des Rades gegenüber dem Transportgerät umsetzen. Dabei sollte das Gehäuseunterteil unter einem Knickwinkel gegenüber dem Gehäuseoberteil schräggestellt sein, so daß die Schwingachse und die Radachse eine gegenüber der Vertikalen geneigte Ebene aufspannen. Hier ist es vor allem hinsichtlich der Kraftübertragung vorteilhaft, wenn die durch die Schwingachse und die Radachse aufgespannte Ebene im unbelasteten Zustand des Gehäuses um einen Winkel von 30° bis 60°, vorzugsweise 45° gegenüber der Vertikalen geneigt ist.

Die vorgenannten Maßnahmen kommen besonders vorteilhaft bei einer Lenkrolle zur Geltung, bei welcher das Gehäuseoberteil über ein Schwenklager um eine vertikale Schwenkachse schwenkbar an einer externen Baueinheit befestigbar ist und das Rad an dem Gehäuseunterteil mit Ausladung gegenüber der Schwenkachse im Nachlauf geführt ist. Hier ist es zur Verbesserung der Tragfähigkeit weiter von Vorteil, wenn die Schwenkachse die Schwingachse senkrecht schneidet.

In baulicher Hinsicht ist es besonders vorteilhaft, wenn das Rückstellelement durch eine stumpf abgewinkelte, vorzugsweise geschichtete Blattfeder gebildet ist, welche mit jeweils einem ihrer Federschenkel an dem Gehäuseoberteil und dem Gehäuseunterteil abgestützt und dabei in das Gehäuse integriert ist.

Um den Fahrkomfort weiter zu erhöhen, ist vorteilhafterweise mindestens ein Dämpfungselement zur Begrenzung der Schwingungsfähigkeit des Gehäuseunterteils gegenüber dem Gehäuseoberteil vorgesehen. In diesem Zusammenhang ist es besonders günstig, wenn zwei Dämpfungselemente mit voneinander unterschiedlicher Dämpfungskraft vorgesehen sind, wobei das härtere Dämpfungselement die Einfederbewegung und das weichere Dämpfungselement die Rückstellbewegung des Gehäuseunterteils dämpft. Dabei können die Dämpfungselemente durch ein Elastomerstück gebildet sein, welches vorzugsweise in einem Gehäusekäfig mit dem Gehäuseunterteil und dem Gehäuseoberteil wirkverbunden ist.

Zur Verbesserung der Rolleigenschaften auch bei schlechter Bodenbeschaffenheit kann das Rad als ein an dem Gehäuseunterteil über ein Pendelgelenk gelagertes Doppelrad ausgebildet sein. Dabei kann das Pendelgelenk durch ein in einer Lagerbohrung des Gehäuseunterteils begrenzt drehbar gelagertes zentrales Kugelstück einer die Einzelräder des Doppelrads miteinander verbindenden Starrachse gebildet sein, und es können die Einzelräder des Doppelrades jeweils über eine die Starrachse umschließende elastische Manschette gegenüber dem Gehäuseunterteil abgestützt sein.

Um die Einsatzmöglichkeiten auch bei schlechten Umgebungsbedingungen zu verbessern, weist das Rad einen auf einer starr mit der Radachse verbundenen Radkörper drehbar gelagerten, eine radial nach außen weisende Lauffläche besitzenden Laufring auf. Dabei ist es von Vorteil, wenn der Laufring ein Zylinderrollenlager aufweist, dessen Innenring drehfest mit dem Radkörper verbunden ist und dessen Außenring einen Flachgummireifen als Lauffläche trägt.

Um den Bedienkomfort weiter zu erhöhen, ist vorteilhafterweise eine hydraulisch arbeitende Brems/Feststell-Einrichtung zum Abbremsen und Feststellen des Rads vorgesehen. Diese kann ein hydraulisch betätigbares, die Rollbahn eines die Lauffläche des Rades tragenden Radialwälzlagers verformendes Bremsorgan aufweisen, wobei das Bremsorgan durch eine unter Druckbeaufschlagung radial gegen den Innenring des vorzugsweise als Zylinderrollenlager ausgebildeten Radialwälzlagers andrückbare Membran gebildet ist.

Vorteilhafterweise weist die Brems/Feststell-Einrichtung einen von einer externen Betätigungsstelle her durch das Gehäuse hindurch über die Radachse in die Radfelge geführten Hydraulikkanal auf. Weiterhin ist es zur Vereinfachung der Handhabung vorgesehen, daß die Brems/Feststell-Einrichtung eine Betätigungsvorrichtung aufweist, welche einen drehbaren Handgriff und einen durch Verdrehen des Handgriffs in eine Hubbewegung versetzbaren Tauchkolben umfaßt. Dabei kann die Betätigungsvorrichtung nach Art einer Bajonettverbindung einen mit dem Tauchkolben verbundenen Stift und eine den Stift führende, an dem Handgriff umfangsseitig ausgebildete Führungskulisse zur Erzeugung eines hydraulischen Arbeitsdruckes aufweisen. Um ein Feststellen des Rades zu ermöglichen, kann die Führungskulisse eine Rastausnehmung zur Sicherung des Stifts in einer Druckhubstellung des Tauchkolbens aufweisen.

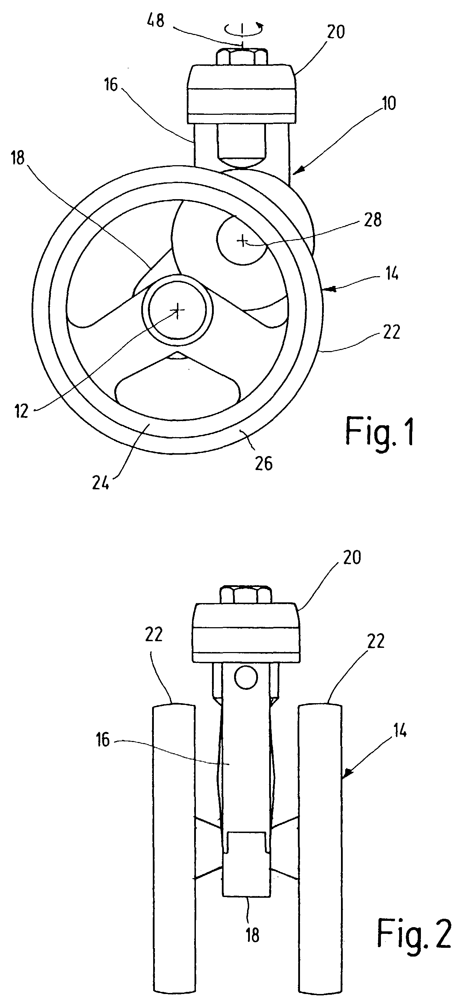

Im folgenden wird die Erfindung anhand eines in der Zeichnung in schematischer Weise dargestellten Ausführungsbeispiels näher erläutert. Es zeigen
- Fig. 1 und Fig. 2: eine Seitenansicht und eine Stirnansicht einer erfindungsgemäßen Rolle;
- Fig. 3: einen Vertikalschnitt durch das Gehäuse der Rolle nach Fig. 1 in einer unbelasteten Stellung;
- Fig. 4: eine Fig. 3 entsprechende Darstellung bei belasteter Rolle;
- Fig. 5: ein pendelnd gelagertes Doppelrad der Rolle in einer ausgelenkten Stellung im Axialschnitt;
- Fig. 6: ein Einzelrad des Doppelrads nach Fig. 5 in einem ausschnittsweisen Schnitt in der Radmitte der Ebene;
- Fig. 7: das obere Gehäuseteil der Rolle in einem Vertikalschnitt in einem zu der Schnittebene zu der Fig. 3 senkrechten zentralen Vertikalschnitt; und
- Fig. 8 und 9: eine Betätigungsvorrichtung einer Bremseinrichtung der Rolle in einer Ansicht und in geschnittener Darstellung.

Die in der Zeichnung dargestellte Rolle läßt sich beispielsweise als Krankenbettenrolle einsetzen und umfaßt ein Gehäuse 10 und ein über eine Radachse 12 an dem Gehäuse gelagertes Rad 14. Das Gehäuse 10 ist zweiteilig aus einem Gehäuseoberteil 16 sowie einem Gehäuseunterteil 18 gebildet und über eine Verbindungsvorrichtung 20 um eine vertikale Schwenkachse schwenkbar an einer externen Baueinheit, beispielsweise einem Fuß des Krankenbetts befestigbar. Das Rad 14 besteht als Doppelrad aus zwei Einzelrädern 22, welche einen die Radachse 12 aufnehmenden Radkörper 24 und einen Laufring 26 aufweisen. Das Gehäuseunterteil 18 ist als Schwinge mit einer im Abstand von der Radachse 12 parallel zu dieser ausgerichteten Schwingachse 28 an dem Gehäuseoberteil 16 angelenkt und daran über ein federelastisches Rückstellelement, welches als in das Gehäuse 10 integrierte Blattfeder 30 ausgebildet ist, abgefedert.

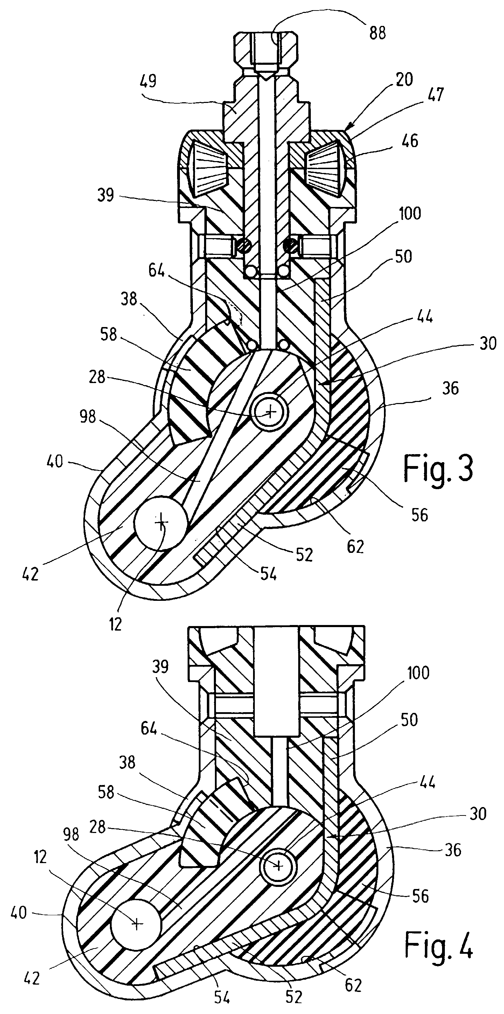

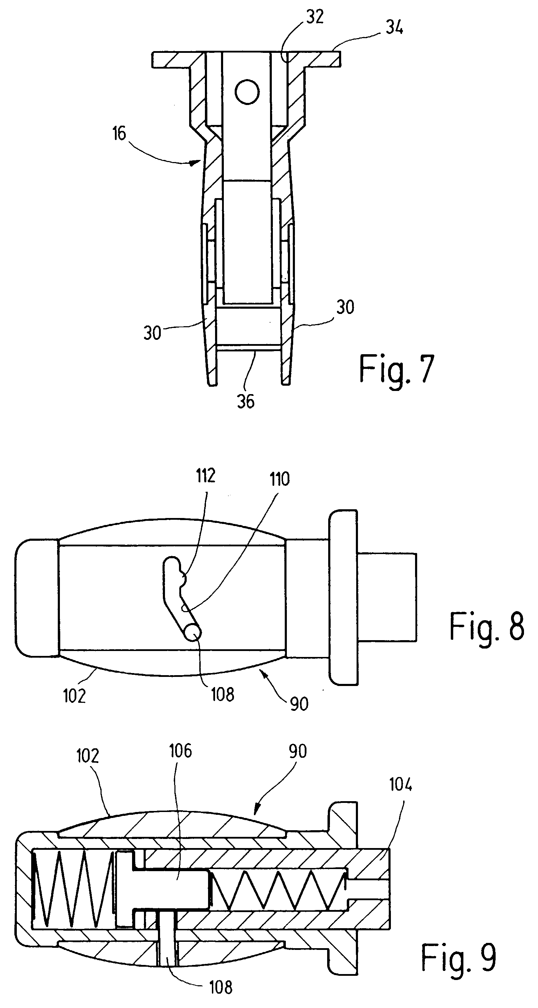

Wie aus Fig. 3 und insbesondere Fig. 7 ersichtlich, weist das Gehäuseoberteil 16 zwei kreisförmige Seitenwangen 30 auf, die sich nach oben zu einem eine Aufnahmeöffnung 32 für die Verbindungsvorrichtung 20 umschließenden Flansch 34 erweitern und über einen Teil ihres Umfangs durch schalenförmige vordere und hintere Querwandungen 36, 38 verbunden sind. In das Gehäuseoberteil ist ein oberer Gehäuseeinsatz 39 aus Kunststoff eingesetzt. Das Gehäuseunterteil 18 greift mit seitlichen Lagerplatten 40 und einem dazwischen angeordneten unteren Gehäuseeinsatz 42 aus Kunststoff formkomplementär zwischen den Seitenwangen 30 ein, wobei eine Lagerhülse 44 als Schwingachse die Teile 16, 40, 42 drehbeweglich miteinander verbindet.

Wie Fig. 3 zeigt, weist die Verbindungsvorrichtung 20 ein Kegelrollenlager 46 als Schwenklager auf, welches eine Drehung um eine die Schwingachse 28 vertikal schneidende Schwenkachse 48 gegenüber einer externen Baueinheit ermöglicht. De Gehäuseeinsatz 39 bildet dabei mit seinem oberen Abschnitt eine gehäusefeste Lagerschale, die mit einer durch einen konzentrisch angeordneten Verbindungszapfen 49 gehaltenen weiteren Lagerschale 47 zusammenwirkt. Der Verbindungszapfen 49 ist mittels Kugeldruckstücken an dem Gehäuseoberteil 16 drehbar gehalten und an seinem freien Ende mit einem externen Bauteil drehfest verbindbar. Das Gehäuseunterteil 18 ist dabei unter einem Knickwinkel gegenüber dem Gehäuseoberteil 16 schräggestellt, wobei eine durch die Schwingachse 28 und die Radachse 12 aufgespannte Ebene im unbelasteten Zustand der Rolle die Schwenkachse 48 unter einen Winkel von etwa 45° schneidet. Das Rad 14 wird also mit horizontaler Ausladung seiner Radachse 12 gegenüber der Schwenkachse 48 im Nachlauf geführt, wobei über die Schwingachse 28 eine Hubbewegung des Rades 14 unter Veränderung der Ausladung ermöglicht wird.

Die Blattfeder 30 ist zwischen dem Gehäuseoberteil 16 und dem Gehäuseunterteil 18 vorgespannt, wobei ein Federschenkel 50 innenseitig an der Querwandung 36 abgestützt ist und der andere Federschenkel 52 in eine gegenüber der Lagerplatte 40 randoffene Nut 54 des Gehäuseeinsatzes 42 eingesetzt ist. Die Blattfeder 30 ist damit frei von Befestigungselementen in das Gehäuse 10 integriert. Um eine Auslenkung um die Schwingachse 28 zu dämpfen, sind zwei als Elastomerstücke ausgebildete Dämpfungselemente 56, 58 vorgesehen, welche in durch das Gehäuseoberteil 16 und das Gehäuseunterteil 18 begrenzten Gehäusekäfigen 62, 64 bezüglich der Schwingachse 28 einander diametral gegenüberliegend angeordnet sind. Die Dämpfungselemente besitzen eine unterschiedliche Shore-Härte, wobei das härtere Dämpfungselement 58 die Einfederbewegung und das weichere Dämpfungselement 56 die Rückstellbewegung des Gehäuseunterteils 18 dämpft.

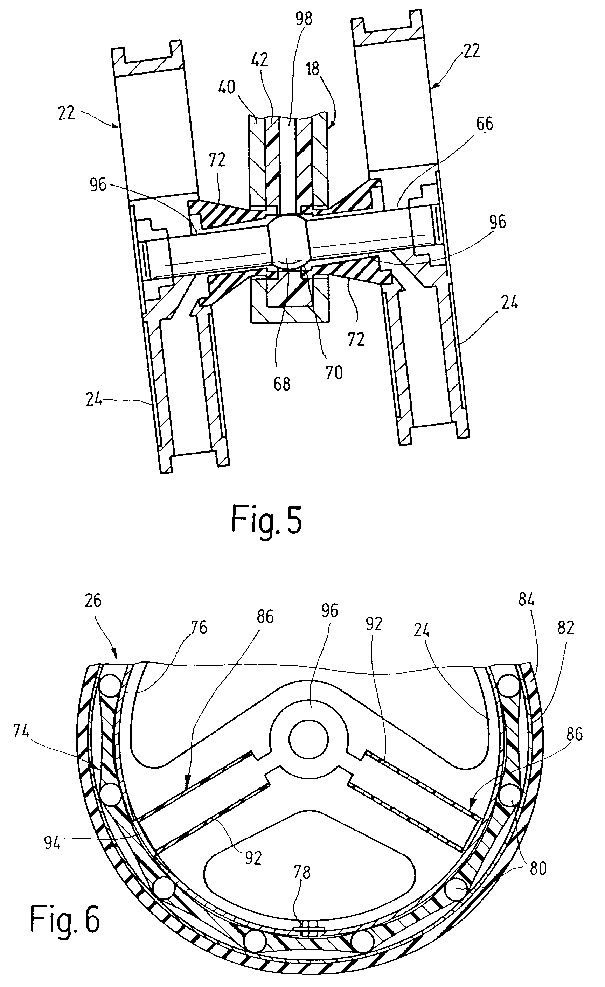

Wie in Fig. 5 gezeigt, ist das Doppelrad 14 pendelnd an dem Gehäuseunterteil 18 gelagert. Hierzu sind die beidseitig von dem Gehäuseunterteil 18 angeordneten Einzelräder 22 an ihren Radkörpern 24 über eine die Radachse 12 bildende Starrachse 66 miteinander verbunden, welche über ein zentrales Kugelstück 68 in einer Lagerbohrung 70 des Gehäuseeinsatzes 42 gelagert ist. Zur Stabilisierung der Pendellagerung sind die Radkörper 24 der Einzelräder 22 über jeweils eine den zugeordneten Achsschenkel der Starrachse 66 umschließende, stirnseitig eine Mehrkantkontur aufweisende elastische Manschette 72 gegenüber dem Gehäuseunterteil verdrehsicher abgestützt.

Der in Fig. 6 gezeigte Laufring 26 der Einzelräder 22 weist ein Zylinderrollenlager 74 auf, dessen Innenring 76 über den Sicherungsstift 78 drehfest mit dem Radkörper 24 verbunden ist, während der auf den Rollen 80 drehbare Außenring 82 einen Flachgummireifen 84 als Lauffläche trägt. Um das Doppelrad 14 abbremsen und gegebenenfalls feststellen zu können, ist eine Brems/Feststell-Einrichtung vorgesehen, welche jeweils eine in die Einzelräder 22 integrierte Bremsvorrichtung 86 und eine damit über einen Hydraulikkanal 88 verbundene externe Betätigungsvorrichtung 90 (Fig. 8, 9) umfaßt. Die Bremsvorrichtung 86 weist zwei in dem Radkörper 24 der Einzelräder 22 angeordnete Hydraulikzylinder 92 auf, welche bodenseitig durch eine elastische Membran 94 begrenzt sind, die bei Druckbeaufschlagung radial gegen die Innenseite des Innenrings 76 andrückt. Der Innenring 76 ist an einer nicht gezeigten Trennstelle geteilt und verformt sich daher durch den Druck der Membranen 94 unter Bildung einer Engstelle gegenüber dme Außenring 82, welche die Rollen 80 nur mit erhöhter Reibung passieren können. Auf diese Weise wird eine intermittierend wirkende Bremskraft erzeugt, welche ein schlupffreies Abbremsen ermöglicht.

Zur Druckflüssigkeitsversorgung der Bremsvorrichtung 86 ist der Hydraulikkanal 88 über mehrere Kanalabschnitte in die Rolle integriert. Ein erster Abschnitt 96 ist dabei als Ringkanal zwischen der Starrachse 66 und den Manschetten 72 zu dem Gehäuseunterteil 18 geführt. Dort verläuft ein weiterer Abschnitt 98 durch das Gehäuseeinsatz 42 zu einem durch das Gehäuseoberteil 16 geführten Kanalstück 100 und weiter zu einer nicht gezeigten Verbindungsleitung, welche an die Betätigungsvorrichtung 90 angeschlossen ist. Die Betätigungsvorrichtung 90 ist in einen drehbaren Handgriff 102 eingebaut, welcher zugleich zum Manövrieren des durch die Rolle fahrbar gemachten Geräts dient. Zur Druckerzeugung ist ein mit dem Hydraulikkanal 88 verbindbarer Druckzylinder 104 vorgesehen, welcher den Handgriff 102 in koaxialer Anordnung trägt. In den Druckzylinder 104 greift ein Tauchkolben 106 ein, welcher an seinen beiden freien Stirnflächen federbelastet gegen die zugewandten Innenflächen des Druckzylinders 104 und des Handgriffs 102 abgestützt ist. Der Tauchkolben 106 ist fest mit einem radial abstehenden Schubstift 108 verbunden, welcher nach Art einer Bajonettverbindung in eine an dem Handgriff 102 ausgebildete, über einen Teil von dessen Umfang mit axialer Steigung verlaufende Führungskulisse 110 eingreift. Zur Sicherung einer Druckhubstellung des Tauchkolbens 106 bzw. einer Feststellung des Rads 14 weist die Führungskulisse eine Rastausnehmung 112 auf, in welcher der Schubstift 108 federbelastet einrastet.

## Patentansprüche

1. Rolle, insbesondere für Apparate, Transportgeräte oder Möbel, mit einem an einer externen Baueinheit befestigbaren Gehäuse (10) und einem über eine Radachse (12) an dem Gehäuse (10) gelagerten Rad (14), **dadurch gekennzeichnet,** daß das Gehäuse (10) ein Gehäuseoberteil (16) und ein daran über ein federelastisches Rückstellelement (30) abgefedertes, das Rad (14) führendes Gehäuseunterteil (18) aufweist.

2. Rolle nach Anspruch 1, **dadurch gekennzeichnet,** daß das Gehäuseunterteil (18) als Schwinge mit einer im Abstand von der Radachse (12) parallel zu dieser ausgerichteten Schwingachse (28) an dem Gehäuseoberteil (16) angelenkt ist.

3. Rolle nach Anspruch 2, **dadurch gekennzeichnet,** daß das Gehäuseunterteil (18) unter einem Knickwinkel gegenüber dem Gehäuseoberteil (16) schräggestellt ist, so daß die Schwingachse (28) und die Radachse (12) eine gegenüber der Vertikalen geneigte Ebene aufspannen.

4. Rolle nach Anspruch 2 oder 3, **dadurch gekennzeichnet,** daß die durch die Schwingachse (28) und die Radachse (12) aufgespannte Ebene im unbelasteten Zustand des Gehäuses (10) um einen Winkel von 30° bis 60°, vorzugsweise 45° gegenüber der Vertikalen geneigt ist.

5. Rolle nach einem der Ansprüche 1 bis 4, **dadurch gekennzeichnet,** daß das Gehäuseoberteil (16) über ein Schwenklager (46) um eine vertikale Schwenkachse (48) schwenkbar an einer externen Baueinheit befestigbar ist, und daß das Rad (14) an dem Gehäuseunterteil (18) mit Ausladung gegenüber der Schwenkachse (48) im Nachlauf geführt ist.

6. Rolle nach einem der Ansprüche 2 bis 5, **dadurch gekennzeichnet,** daß die Schwenkachse (48) die Schwingachse (28) senkrecht schneidet.

7. Rolle nach einem der Ansprüche 1 bis 6, **dadurch gekennzeichnet,** daß das Rückstellelement durch eine stumpf abgewinkelte, vorzugsweise geschichtete Blattfeder (30) gebildet ist, welche mit jeweils einem ihrer Federschenkel (50,52) an dem Gehäuseoberteil (16) und dem Gehäuseunterteil (18) abgestützt ist.

8. Rolle nach Anspruch 7, **dadurch gekennzeichnet,** daß die Blattfeder (30) in das Gehäuse (10) integriert ist.

9. Rolle nach einem der Ansprüche 1 bis 8, **gekennzeichnet durch** mindestens ein Dämpfungselement (56,58) zur Begrenzung der Schwingungsfähigkeit des Gehäuseunterteils (18) gegenüber dem Gehäuseoberteil (16).

10. Rolle nach Anspruch 9, **dadurch gekennzeichnet,** daß zwei Dämpfungselemente (56,58) mit voneinander unterschiedlicher Dämpfungskraft vorgesehen sind, wobei das härtere Dämpfungselement (58) eine Einfederbewegung und das weichere Dämpfungselement (56) eine Rückstellbewegung des Gehäuseunterteils (18) dämpft.

11. Rolle nach Anspruch 9 oder 10, **dadurch gekennzeichnet,** daß das mindestens eine Dämpfungselement (56,58) durch ein Elastomerstück gebildet ist, welches vorzugsweise in einem Gehäusekäfig mit dem Gehäuseunterteil (18) und dem Gehäuseoberteil (16) wirkverbunden ist.

12. Rolle nach einem der Ansprüche 1 bis 11, **dadurch gekennzeichnet,** daß das Rad (14) als ein an dem Gehäuseunterteil (18) über ein Pendelgelenk (68,70) gelagertes Doppelrad (14) ausgebildet ist.

13. Rolle nach Anspruch 12, **dadurch gekennzeichnet,** daß das Pendelgelenk durch ein in einer Lagerbohrung (70) des Gehäuseunterteils (18) begrenzt drehbar gelagertes zentrales Kugelstück (68) einer die Einzelräder (22) des Doppelrads (14) miteinander verbindenden Starrachse (66) gebildet ist.

14. Rolle nach Anspruch 12 oder 13, **dadurch gekennzeichnet,** daß die Einzelräder (22) des Doppelrads (14) jeweils über eine die Starrachse (66) umschließende elastische Manschette (72) gegenüber dem Gehäuseunterteil (18) abgestützt sind.

15. Rolle nach einem der Ansprüche 1 bis 14, **dadurch gekennzeichnet,** daß das Rad (14) einen auf einer fest mit der Radachse (12) verbundenen Radkörper (24) drehbar gelagerten, eine radial nach außen weisende Lauffläche (84) besitzenden Laufring (26) aufweist.

16. Rolle nach Anspruch 15, **dadurch gekennzeichnet,** daß der Laufring (26) ein Zylinderrollenlager (74) aufweist, dessen Innenring (76) drehfest mit dem Radkörper (24) verbunden ist und dessen Außenring (82) einen Flachgummireifen (84) als Lauffläche trägt.

17. Rolle nach einem der Ansprüche 1 bis 16, **gekennzeichnet durch** eine hydraulisch arbeitende Brems/Feststell-Einrichtung (86,90) zum Abbremsen und Feststellen des Rads (14).

18. Rolle nach Anspruch 17, **dadurch gekennzeichnet,** daß die Brems/Feststell-Einrichtung ein hydraulisch betätigbares, die Rollbahn eines die Lauffläche (84) des Rads (14) tragenden Radialwälzlagers (74) verformendes Bremsorgan (94) aufweist.

19. Rolle nach Anspruch 18, **dadurch gekennzeichnet,** daß das Bremsorgan durch eine unter Druckbeaufschlagung radial gegen den Innenring (76) des vorzugsweise als Zylinderrollenlager (74) ausgebildeten Radialwälzlagers andrückbare Membran (94) gebildet ist.

20. Rolle nach einem der Ansprüche 17 bis 19, **dadurch gekennzeichnet,** daß die Brems/Feststell-Einrichtung einen von einer externen Betätigungsstelle her durch das Gehäuse (10) hindurch über die Radachse (12) in die Radfelge geführten Hydraulikkanal (88) aufweist.

21. Rolle nach einem der Ansprüche 17 bis 20, **dadurch gekennzeichnet,** daß die Brems/Feststell-Einrichtung eine Betätigungsvorrichtung (90) aufweist, welche einen drehbaren Handgriff (102) und einen durch Verdrehen des Handgriffs in eine Hubbewegung versetzbaren Tauchkolben (106) umfaßt.

22. Rolle nach Anspruch 21, **dadurch gekennzeichnet,** daß die Betätigungsvorrichtung nach Art einer Bajonettverbindung einen mit dem Tauchkolben (106) verbundenen Stift (108) und eine den Stift führende, an dem Handgriff (102) umfangsseitig ausgebildete Führungskulisse (110) aufweist.

23. Rolle nach Anspruch 22, **dadurch gekennzeichnet,** daß die Führungskulisse (110) eine Rastausnehmung (112) zur Sicherung des Stifts (108) in einer Druckhubstellung des Tauchkolbens (106) aufweist.
